# EUROPÄISCHE PATENTSCHRIFT

(11) **EP 0 951 329 B1**
(45) Veröffentlichungstag und Bekanntmachung des Hinweises auf die Patenterteilung: **23.08.2000**
(21) Anmeldenummer: 97953810.5
(22) Anmeldetag: 13.12.1997
(51) Int. Cl.: B01D 29/21

(54) **FILTER, INSBESONDERE FÜR DAS SCHMIERÖL EINER BRENNKRAFTMASCHINE**
FILTER, IN PARTICULAR FOR THE LUBRICATING OIL OF AN INTERNAL COMBUSTION ENGINE
FILTRE, NOTAMMENT POUR L'HUILE DE LUBRIFICATION D'UN MOTEUR A COMBUSTION INTERNE

(30) Priorität: 10.01.1997 DE 19700564
(43) Veröffentlichungstag der Anmeldung: 27.10.1999
(73) Patentinhaber: FILTERWERK MANN & HUMMEL GmbH, 71631 Ludwigsburg (DE)
(72) Erfinder: GANDINI, Sergio, D-70806 Kornwestheim (DE); PETSCHL, Thomas, D-71636 Ludwigsburg (DE)
(74) Vertreter: Voth, Gerhard, Dipl.-Ing.
(86) Internationale Anmeldenummer: EP9707015
(87) Internationale Veröffentlichungsnummer: WO9830310

(56) Entgegenhaltungen:
- EP-A- 0 616 825
- DE-A- 4 139 680
- FR-A- 2 229 444
- US-A- 3 868 325

## Beschreibung

Die Erfindung betrifft ein Filter, insbesondere für das Schmieröl einer Brennkraftmaschine nach der Gattung des Patentanspruchs 1.

Ein solches Filter ist z. B. aus der DE 41 39 680 bekannt. Dieses Filter weist gemäß der Figur 1 der Veröffentlichung eine Rundfilterpatrone auf, die mit Hilfe von Dichtungen 18, 19 auf ein Mittelrohr geschoben ist. Das Mittelrohr ist fest mit einer Gehäuseglocke 11 verbunden, wodurch eine Vereinfachung der Baugruppe bei höherer Wirtschaftlichkeit erzielt werden kann. Die Gehäuseglocke ist mittels eines Adapters 15 z. B. an einen Motorblock angeschlossen. Durch Verwendung unterschiedlicher Adapter ist eine flexible Verwendung des Filters für unterschiedliche Anschlußmaße möglich.

Die dargestellte Bauform hat jedoch auch Nachteile. Durch Verwendung des Adapters wird ein zusätzlicher Dichtaufwand in Form von Dichtringen 14, 24 notwendig. Auch die Dichtungen, die zur Abdichtung der Filterpatrone zur Anwendung kommen, haben eine komplexe Struktur, so daß keine Normteile verwendet werden können.

Der Erfindung liegt daher die Aufgabe zugrunde, ein Filter, insbesondere für Schmieröl einer Brennkraftmaschine zu schaffen, welches aus wenigen Bauteilen besteht und damit wartungsfreundlich sowie kostengünstig ist. Diese Aufgabe wird durch die Merkmale des Patentanspruchs 1 gelöst.

Der wesentliche Vorteil der Erfindung ist darin zu sehen, daß das Filter in der Grundversion lediglich aus vier Bauteilen, nämlich einem Gehäuse, einem Mittelrohr, einer metallfreien Patrone und einer Dichtung besteht. In bevorzugter Weise ist das Gehäuse ein Kunststoffspritzgießteil. Dieses ist in der Herstellung sehr preiswert und kann beispielsweise auch aus Recyclingmaterial hergestellt werden.

Das Filter ist mit einem austauschbaren Filterelement versehen. Das Filterelement ist lediglich über das Stützrohr geschoben und weist eine radiale Abdichtung auf.

Das gesamte Gehäuse ist in Richtung eines Flansches offen. Dies bedeutet, daß keine Endscheibe, welches das topfförmige Gehäuse verschließt, erforderlich ist. Durch den Wegfall der Endscheibe ist der unmittelbare Zugriff auf das Filterelement gewährleistet, so daß dieses ohne besondere Hilfsmittel ausgetauscht werden kann.

In einer Ausgestaltung der Erfindung ist vorgesehen, das Stützrohr mit dem Gehäuse zu verschrauben oder bei Verwendung von Spritzgießkunststoff mittels Ultraschall oder Hochfrequenz zu verschweißen bzw. zu verkleben.

Das Filterelement ist in einer Ausgestaltung der Erfindung mit stirnseitigen Endscheiben versehen, die aus einem Nitrilkautschuk hergestellt sind und damit eine hohe Elastizität aufweisen. Dadurch entfallen zusätzliche Abdichtmittel. Die Endscheiben selbst bewirken eine radiale Abdichtung des Filterelements. Auf dem Stützrohr kann in einer bevorzugten Ausgestaltung ein Filterelement-Umgehungsventil angeordnet sein. Es besteht auch die Möglichkeit ein Rücklaufsperrventil im Stützrohr anzuordnen. Beide Ventile sind einfach aufgebaut und bestehen im wesentlichen aus einer Ventilfeder sowie einer Ventilplatte.

Üblicherweise ist das Filterelement auf dem Stützrohr schwimmend gelagert, d. h. seine axiale Lage wird durch den Endanschlag am Boden des Topfes definiert. Zur exakten Fixierung des Filterelements kann an dem Stützrohr beispielsweise ein Rastelement vorgesehen sein, welches ein Verschieben des Filterelements verhindert. Es besteht auch die Möglichkeit, auf dem Stützrohr eine Hülse oder ähnliches zur Fixierung des Filterelements vorzusehen.

Zur Verhinderung des Rücklaufens von Rohöl, d. h. von noch nicht gefiltertem Öl kann die dem Flansch zugewandte Endscheibe mit einem Rücklaufsperrventil, beispielsweise in Form einer einteiligen Formdichtung ausgestattet sein. Damit wird ein Leerlaufen des Filters wirksam verhindert.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt:
- Figur 1: die Schnittdarstellung eines Einfachfilters,
- Figur 2: das in Figur 1 dargestellte Einfachfilter mit zusätzlichen Elementen.

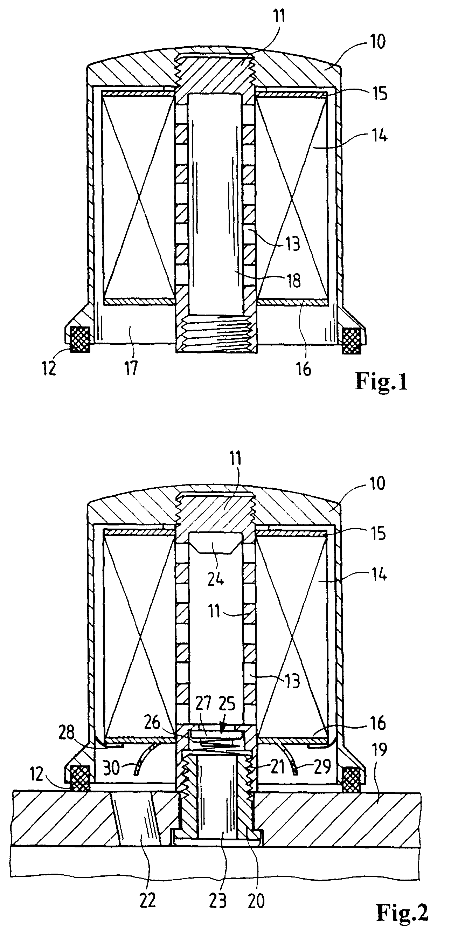

Das Filter gemäß Figur 1 besteht aus einem topfförmigen Gehäuse 10. In diesem Gehäuse ist ein Stützrohr 11 eingeschraubt. Das Gehäuse trägt an der einem Anschlußflansch zugewandten Stirnseite eine Profildichtung 12. Auf das Stützrohr 11, welches mit Durchbrüchen 13 versehen ist, wird ein Filterelement 14 aufgeschoben. Dieses Filterelement 14 besteht aus einem zick-zack-förmig gefalteten Filtermaterial, welches an den Stirnseiten mit Endscheiben 15, 16 versehen ist. Die Endscheiben bilden an ihrer inneren Ringöffnung in Verbindung mit der Stützrohraußenfläche eine Radialdichtung und dichten damit den Rohflüssigkeitsbereich 17 von dem Reinflüssigkeitsbereich 18 ab. Das Filterelement 14 ist lediglich auf das Stützrohr 11 aufgeschoben. Die Dichtungsbereiche der Endscheiben sorgen für einen sicheren Halt desselben im Filtergehäuse.

In Figur 2 ist ein Filter mit weiteren zusätzlichen Merkmalen dargestellt. Das Filter ist an einem Flansch 19 befestigt, wobei an dem Flansch eine Hohlschraube 20 vorgesehen ist, die mit dem Gewinde 21 des Stützrohres 11 in Verbindung steht. Der Zulauf der zu reinigenden Flüssigkeit erfolgt über die Öffnung 22, der Rücklauf über die bereits erwähnte Hohlschraube 20 und deren Öffnung 23.

In dem Stützrohr 11 befindet sich ein Filterelement-Umgehungsventil 24 sowie ein Rücklaufsperrventil 25. Das Rücklaufsperrventil besteht im wesentlichen aus einer Feder 26 und einer Ventilplatte 27. An dem Filterelement 14 bzw. an dessen Endscheibe 16 ist eine Rücklaufsperre für die Rohflüssigkeit in Form einer Dichtlippe 28 angeordnet. An der Endscheibe 16 sind weiterhin zwei Entnahmelaschen 29, 30 vorgesehen. Diese vereinfachen das Entfernen des Filterelements 14. Das Filterelement 14 kann damit manuell oder mit einem einfachen Werkzeug von dem Stützrohr abgezogen werden.

Der Austausch des Filterelements ist in unterschiedlicher Weise möglich. Wie bereits erwähnt, besteht die Möglichkeit, das Filterelement 14 von dem Stützrohr 11 abzuziehen und durch ein neues zu ersetzen. Es besteht aber auch die alternative Möglichkeit, die Verbindung zwischen Stützrohr 11 und Gehäuse 10 zu öffnen, das Stützrohr herauszudrehen und das Filterelement auf der gegenüberliegenden Seite des Stützrohres abzuziehen. Es soll hier nicht unerwähnt bleiben, daß auch die Möglichkeit besteht, das komplette Filter durch ein neues zu ersetzen. Das verbrauchte Filter kann einer Aufbereitungsanlage zugeführt werden.

## Patentansprüche

1. Filter, insbesondere für das Schmieröl einer Brennkraftmaschine, bestehend aus einem topfförmigen Filtergehäuse (10), einem im Filtergehäuse angeordneten Stützrohr (11) und einem auf dem Stützrohr befestigten Filterelement (14), welches im wesentlichen aus einem zickzackförmig gefaltetem Filtermittel mit an dessen Stirnseite angebrachten elastischen Endscheiben (15, 16) besteht, wobei das Filtergehäuse (10) unmittelbar eine Dichtung (12) zum Abdichten zwischen Gehäuse und Flansch aufnimmt, dadurch gekennzeichnet, daß das Filterelement (14) mit seinen Endscheiben (15, 16) radial abdichtend auf das mit einem Anschraubgewinde (21) versehene und über eine Schraubverbindung mit dem Flansch (19) befestigbare Stützrohr geschoben ist.

2. Filter nach Anspruch 1, dadurch gekennzeichnet, daß das Stützrohr (11) mit dem Gehäuse (10) verschraubt, verschweißt oder verklebt ist.

3. Filter nach einem der vorherigen Ansprüche, dadurch gekennzeichnet, daß ein Filterelement-Umgehungsventil (24) und/oder ein Rücklaufsperrventil (25) im Stützrohr (11) angeordnet ist.

4. Filter nach einem der vorherigen Ansprüche, dadurch gekennzeichnet, daß an dem Stützrohr (11) ein Rastelement zur Positionierung des Filterelement (14) vorgesehen ist.

5. Filter nach einem der vorherigen Ansprüche, dadurch gekennzeichnet, daß an der dem Flansch (19) zugewandten Endscheibe (16) des Filterelements (14) ein Element zur Verhinderung des Rücklaufs des Rohöls und/oder ein Element zur Entnahme des Filterelements vorgesehen ist.

6. Filter nach einem der vorherigen Ansprüche, dadurch gekennzeichnet, daß das Gehäuse (10) und/oder das Stützrohr (11) aus einem Spritzgießkunststoff hergestellt ist.

## Claims

1. Filter, more especially for the lubricating oil of an internal combustion engine, comprising a cup-shaped filter housing (10), a support pipe (11) which is disposed in the filter housing, and a filter element (14) which is mounted on the support pipe and substantially comprises a filtering means, which is folded in a zigzag-shaped manner and is provided with resilient end plates (15, 16), which are attached to the end faces of said means, the filter housing (10) directly accommodating a seal (12) for providing sealing between housing and flange, characterised in that the filter element (14) is slipped, by its end plates (15, 16), over the support pipe, which is provided with a screw-on thread (21) and is securable to the flange (19) via a screw connection, in a radially sealing manner.

2. Filter according to claim 1, characterised in that the support pipe (11) is screw-connected, welded or adhered to the housing (10).

3. Filter according to one of the previous claims, characterised in that a filter element by-pass valve (24) and/or a non-return valve (25) are/is disposed in the support pipe (11).

4. Filter according to one of the previous claims, characterised in that a locking element is provided on the support pipe (11) for positioning the filter element (14).

5. Filter according to one of the previous claims, characterised in that an element for preventing the return of the crude oil and/or an element for removing the filter element are/is provided on the end plate (16) of the filter element (14) facing the flange (19).

6. Filter according to one of the previous claims, characterised in that the housing (10) and/or the support pipe (11) are/is produced from an injection-mouldable plastics material.

## Revendications

1. Filtre, en particulier pour l'huile de lubrification d'un moteur à combustion interne, consistant en un boîtier de filtre (10) en forme de pot, en un tube support (11), disposé dans le boîtier du filtre, et en un élément de filtration (14) fixé sur le tube support, élément de filtration qui se compose essentiellement d'un moyen de filtration replié en forme de zigzag avec des disques terminaux (15, 16) élastiques, mis sur ses faces frontales, le boîtier de filtre (10) recevant directement un joint d'étanchéité (12) servant à assurer l'étanchéité entre le boîtier et une bride,
caractérisé en ce que
l'élément de filtre (14) est enfoncé en assurant l'étanchéité avec ses disques terminaux (15, 16) radialement sur le tube support pourvu d'un filetage de vissage (21) et pouvant être fixé au moyen d'une liaison à vis avec la bride (19).

2. Filtre selon la revendication 1,
caractérisé en ce que
le tube support (11) est vissé, soudé ou collé avec le boîtier (10).

3. Filtre selon l'une des revendications précédentes,
caractérisé en ce qu'
on dispose une vanne de contournement de l'élément de filtre (24) et/ou une vanne anti-retour (25) dans le tube support (11).

4. Filtre selon l'une des revendications précédentes,
caractérisé en ce qu' ,
on prévoit sur le tube support (11) un élément d'encliquetage pour positionner l'élément de filtre (14).

5. Filtre selon l'une des revendications précédentes,
caractérisé en ce qu'
on prévoit sur le disque terminal (16) de l'élément de filtre (14), qui est tourné vers la bride (19), un élément pour empêcher le retour de l'huile non purifiée et/ou un élément pour enlever l'élément de filtre.

6. Filtre selon l'une des revendications précédentes,
caractérisé en ce que
le boîtier (10) et/ou le tube support (11)sont réalisés en une matière plastique à injecter.
